(19) Europäisches Patentamt
European Patent Office
Office européen des brevets

(11) **EP 4 660 026 A1**

(12) **EUROPEAN PATENT APPLICATION**

(43) Date of publication:
**10.12.2025 Bulletin 2025/50**

(21) Application number: **24180853.4**

(22) Date of filing: **07.06.2024**

(51) International Patent Classification (IPC):
**B60T 8/172** (2006.01)    **B60T 8/174** (2006.01)
**B60T 13/66** (2006.01)    **B60T 17/22** (2006.01)

(52) Cooperative Patent Classification (CPC):
**B60T 8/174; B60T 8/172; B60T 13/662;
B60T 17/22;** B60T 2270/406; B60T 2270/86

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **VOLVO TRUCK CORPORATION
405 08 Göteborg (SE)**

(72) Inventor: **SUBRAMANAIAN,, Chidambaram
Jamestown, NC 27282 (US)**

(74) Representative: **Valea AB
Box 1098
405 23 Göteborg (SE)**

(54) **SYSTEM AND METHOD FOR DETERMINATION OF TARGET BRAKE TORQUE DATA**

(57)    A computer system (30) comprising a learning model (34) and processing circuitry (36) configured to train the learning model (34) for use in determination of target brake torque data, indicative of a target brake torque for at least each one of a service brake (24) and an auxiliary brake (26; 28) of a vehicle (10), the processing circuitry (36) being configured to:
- receive braking condition information (38) comprising the following for each braking condition of a plurality of different braking conditions of the vehicle (10):
∘ operating condition data indicative of a current or predicted operating condition of the vehicle (10) during the braking condition;
∘ brake torque data, indicative of an applied brake torque for at least each one of the service brake (24) and the auxiliary brake (26; 28) during the braking condition, and
∘ vehicle dynamic response data indicative of a vehicle dynamic response of the vehicle (10) during the braking condition,

- for each braking condition of the plurality of different braking conditions of the vehicle (10), associate the braking condition with a penalty in response to determining that the vehicle dynamic response data is indicative of a vehicle dynamic response of the vehicle (10) during the braking condition being outside an allowable vehicle dynamic response range,
- input training data (40) to the learning model (34) to train the learning model (34) through machine learning,
wherein the training data (40) comprises at least the operating condition data and the brake torque data for at least each braking condition of the plurality of different braking conditions not being associated with a penalty.

Fig. 3

EP 4 660 026 A1

# Description

## TECHNICAL FIELD

The disclosure relates generally to braking of a vehicle. In particular aspects, the disclosure relates to a system and a method for determination of target brake torque data. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

A vehicle may be equipped with at least each one of a service brake and an auxiliary brake, each one of which being adapted to impart a brake torque or a brake load on the vehicle for deceleration purposes. The service brake and the auxiliary brake can be used individually or in combination. It would be desirable to control the braking of a vehicle in an appropriate manner.

## SUMMARY

Of a first aspect of the disclosure, there is provided a computer system comprising a learning model and processing circuitry configured to train the learning model for use in determination of target brake torque data, indicative of a target brake torque for at least each one of a service brake and an auxiliary brake of a vehicle. The processing circuitry is configured to:

- receive braking condition information comprising the following for each braking condition of a plurality of different braking conditions of the vehicle:

  ○ operating condition data indicative of a current or predicted operating condition of the vehicle during the braking condition;
  ○ brake torque data, indicative of an applied brake torque for at least each one of the service brake and the auxiliary brake during the braking condition, and
  ○ vehicle dynamic response data indicative of a vehicle dynamic response of the vehicle during the braking condition,

- for each braking condition of the plurality of different braking conditions of the vehicle, associate the braking condition with a penalty in response to determining that the vehicle dynamic response data is indicative of a vehicle dynamic response of the vehicle during the braking condition being outside an allowable vehicle dynamic response range,
- input training data to the learning model to train the learning model through machine learning,

wherein the training data comprises at least the operating condition data and the brake torque data for at least each braking condition of the plurality of different braking conditions not being associated with a penalty.

The first aspect of the disclosure may seek to obtain a learning model that can be used for braking a vehicle such that the vehicle experiences an appropriate dynamic response during braking thereof. To this end, it has been realized that, depending on the conditions during which a vehicle is braked by one or both of the service brake and the auxiliary brake, the vehicle may experience an undesired dynamic response.

Purely by way of example, braking scenarios may occur in which the auxiliary brake is firstly used for imparting a certain brake torque on some wheels of the vehicle. Should the brake torque imparted by the auxiliary brake be deemed insufficient, the service brake may be applied.

However, in a scenario such as the one identified above, there is a risk that the conditions of the vehicle, such as the rotational speed of the wheels to be braked by the service brake and/or the brake torque to be imparted by the service brake, may render it difficult to sufficiently accurately control the application of brake torque applied by the service brake. Such as lack of accuracy may in turn result in e.g. an oscillating or a jerky behavior of the vehicle. There may also be other conditions of the vehicle in which the auxiliary brake is actuated to provide a brake torque that is difficult to obtain with a reasonably high level of accuracy.

A technical benefit of the first aspect of the disclosure may include that the processing circuitry associates a braking condition having an undesired vehicle dynamic response with a penalty which implies that the learning model may use information indicative of which brake torque data that results in undesired vehicle dynamic responses when training the learning model. This in turn implies that the use of the thus trained learning model may be associated with an appropriately low risk of controlling a service brake and an auxiliary brake such that an undesired vehicle dynamic response is arrived at when the trained learning model is used for controlling braking of a vehicle.

Optionally in some examples, including in at least one preferred example, the term "penalty" may relate to any type of marking indicating that the vehicle dynamic response data is indicative of a vehicle dynamic response of the vehicle during a braking condition being outside an allowable vehicle dynamic response range. Purely by way of example, a "penalty" may be a flag or a boolean value (e.g. 1) which is associated with a braking condition having a vehicle dynamic response being outside an allowable vehicle dynamic response range. It is also envisaged that a "penalty" may be a numerical value, such as an integer, a real number or the like. Purely by way of example, when the "penalty" is a numerical value, the numerical value may be used for indicating how far from the allowable vehicle dynamic response range the vehicle dynamic response of the braking condition is.

Optionally in some examples, including in at least one preferred example, the term "auxiliary brake" may encompass either one or both of a primary and a secondary auxiliary brakes of a vehicle. Primary and secondary refer to the positioning of the auxiliary brake before or after a main gearbox of the vehicle. Examples of primary auxiliary brakes are ISGs (Integrated Starters and Generators) and retarders. A retarder is usually of the hydrodynamic retarder or electromagnetic retarder type. These are arranged between the engine and the main gearbox.

Optionally in some examples, including in at least one preferred example, a primary auxiliary brake can also comprise various types of engine brake, for example a compression brake, an exhaust-gas brake or the basic friction of an engine, such as an internal combustion engine, of the vehicle. The braking energy in a compression brake and an exhaust-gas brake is converted mainly to heat, which is to a great extent dissipated via a cooling system of the engine, but it should be noted that a considerable part may accompany the exhaust gases of the vehicle out through the exhaust system. The basic friction of the engine can be regulated by injecting a certain quantity of fuel into the engine so that output torque from the engine is, for example, zero.

Optionally in some examples, including in at least one preferred example, another possibility is to disengage the engine from the rest of the drive line by means of a clutch arranged between the engine and the gearbox. Here and hereinafter, drive line means the engine of the vehicle and also transmission components coupled to the engine right out to the driving wheels. Other controllable units coupled to the engine which influence the braking force from the engine are, for example, the radiator fan of the engine, the air-conditioning unit of the vehicle, the compressed-air compressor and other auxiliary units coupled to the engine. The braking effect a primary auxiliary brake can deliver may be dependent on the engine speed.

Optionally in some examples, including in at least one preferred example, a secondary auxiliary brake, which may be arranged after the main gearbox of the vehicle, usually consists of a retarder of hydrodynamic or electromagnetic type. The braking effect a secondary auxiliary brake can deliver is dependent on the speed of the vehicle, because the auxiliary brake is mounted on the output shaft of the gearbox, and is therefore proportional to the speed of rotation of the driving wheels.

Optionally in some examples, including in at least one preferred example, an auxiliary brake of the hydrodynamic retarder type usually comprises of an impeller (rotor) and a turbine wheel (stator). The rotor is coupled firmly to, for example, the propeller shaft of the vehicle and rotates with it. The stator is arranged firmly in a retarder housing in which both the rotor and the stator are enclosed. The retarder housing is connected to a container for oil. When oil is pressed into the retarder housing, it is set in motion by the rotor which presses the oil against the stator. As the stator cannot rotate, retardation of the oil flow occurs.

Braking of the rotor and the whole vehicle thus takes place. The brake torque is regulated by the quantity of oil in the retarder housing. The heat which arises when the oil brakes the rotor is usually dissipated via a heat exchanger coupled to the cooling system of the engine. This means that the retarder requires more cooling capacity from the cooling system of the engine compared with, for example, the abovementioned compression brake or exhaust-gas brake where a large part of the braking energy disappears directly out through the exhaust pipe.

Optionally in some examples, including in at least one preferred example, an auxiliary brake of the electromagnetic retarder type usually comprises of a stator in the form of electromagnets and a rotor in the form of soft-iron plates. The rotor is coupled to, for example, the propeller shaft of the vehicle, and the stator is mounted firmly in the vehicle. When current is supplied to the electromagnets, a braking torque arises on the rotor when it rotates. The braking energy is converted into heat on account of the eddy currents which are formed in the soft-iron plates. In the case of prolonged braking, the rotor heats up to such an extent that the formation of eddy currents decreases because the magnetic properties of the soft-iron plates are temperature-dependent, which leads to the braking capacity decreasing. In the case of prolonged use and maximum utilization of the capacity of the retarder, the braking capacity can in principle even disappear completely. The electromagnetic retarder is usually cooled by surrounding air.

Optionally in some examples, including in at least one preferred example, an auxiliary brake may comprise a generator adapted to recapture energy during a braking condition. Purely by way of example, the generator may form part of a traction motor for the vehicle that may be driven in reverse in order to recapture energy. As such, the vehicle may be an at least partially electric vehicle, e.g. a BEV (battery electric vehicle), a HEV (hybrid electric vehicle) or a PHEV (plug-in hybrid vehicle).

Optionally in some examples, including in at least one preferred example, the service brake may comprise one or more disk brakes, e.g. pneumatically or hydraulically controlled disk brakes, and/or one or more drum brakes, e.g. pneumatically or hydraulically controlled drum brakes.

Optionally in some examples, including in at least one preferred example, the training data further comprises information whether or not each braking condition is associated with a penalty. A technical benefit may include that the learning model may also use the information indicative if the penalty when the learning model is trained through machine learning which may enhance the training.

Optionally in some examples, including in at least one preferred example, the training data comprises at least the operating condition data and the brake torque data for only each braking condition of the plurality of different braking conditions not being associated with a penalty. A technical benefit may include that the learning model is only fed with training data relating to braking conditions not being associated with a penalty which implies that the learning model may be trained in an appropriate manner.

Optionally in some examples, including in at least one preferred example, the braking condition information further comprises brake request data indicative of a brake request for the vehicle for each braking condition of a plurality of different braking conditions of the vehicle, preferably the training data also comprises the brake request data for at least each braking condition of the plurality of different braking conditions not being associated with a penalty. A technical benefit may include that the learning model may also use the brake request data when the learning model is trained through machine learning which may enhance the training. For instance, the above implies that the thus trained learning model may provide appropriately adequate results when subsequently receiving brake request data and issuing data to control the brakes.

Optionally in some examples, including in at least one preferred example, the vehicle dynamic response data comprises oscillation data indicative of an oscillation in speed and/or acceleration of the vehicle during the braking condition. A technical benefit may include that the learning model may be trained so as to avoid such oscillations. For instance, the above implies that the thus trained learning model may provide appropriately adequate results, e.g. in terms of appropriately low oscillations, when being used for issuing data for controlling the brakes.

Optionally in some examples, including in at least one preferred example, the processing circuitry is configured to determine whether or not the oscillation data falls outside an allowable oscillation data range. A technical benefit may include an appropriate way for assessing the oscillation data.

Optionally in some examples, including in at least one preferred example, the processing circuitry is configured to assign the braking condition with the penalty if the oscillation data falls outside the allowable oscillation data range. A technical benefit may include an appropriate way for assessing the oscillation data.

Optionally in some examples, including in at least one preferred example, the vehicle dynamic response data comprises deceleration error data indicative of an error between a target deceleration, preferably determined using the brake request data, and an actual deceleration. A technical benefit may include that the learning model may be trained so as to provide data resulting in braking operations that meet the target deceleration in an appropriate manner.

Optionally in some examples, including in at least one preferred example, the processing circuitry is configured to determine whether or not the deceleration error data falls outside an allowable deceleration error data range. A technical benefit may include an appropriate way for assessing the deceleration error data.

Optionally in some examples, including in at least one preferred example, the processing circuitry is configured to assign the braking condition with the penalty if the deceleration error data falls outside an allowable deceleration error data range. A technical benefit may include an appropriate way for assessing the deceleration error data.

Optionally in some examples, including in at least one preferred example, the vehicle dynamic response data comprises integrated deceleration error data indicative of an integrated error between a target deceleration, preferably determined using the brake request data, and an actual deceleration during a predetermined time range. A technical benefit may include that the learning model may be trained so as to provide data resulting in braking operations that meet the target integrated deceleration in an appropriate manner.

Optionally in some examples, including in at least one preferred example, the processing circuitry is configured to determine whether or not the integrated deceleration error data falls outside an allowable integrated deceleration error data range. A technical benefit may include an appropriate way for assessing the integrated deceleration error data.

Optionally in some examples, including in at least one preferred example, the processing circuitry is configured to assign the braking condition with the penalty if the integrated deceleration error data falls outside the allowable integrated deceleration error data range. A technical benefit may include an appropriate way for assessing the integrated deceleration error data.

Optionally in some examples, including in at least one preferred example, the target brake torque data is indicative of a distribution of brake request among at least each one of the service brake and the auxiliary brake of the vehicle. A technical benefit may include an appropriate control of the brakes when the trained learning model is used for controlling braking of a vehicle.

Optionally in some examples, including in at least one preferred example, the processing circuitry is configured to receive the braking condition information from the vehicle.

Optionally in some examples, including in at least one preferred example, the learning model is or comprises an artificial neural network. A technical benefit may include an appropriate implementation of the learning model.

Of a second aspect of the disclosure, there is provided a computer system, comprising processing circuitry, for a vehicle, the vehicle comprising at least a service brake and an auxiliary brake, the processing circuitry being configured to:

- receive brake request data indicative of a brake request for the vehicle;
- receive operating condition data indicative of a current or predicted operating condition of the vehicle;
- input the brake request data and the operating condition data to a trained learning model and obtain target brake torque data, indicative of a target brake torque for at least each one of the service brake and the auxiliary brake, from the trained learning model, and
- issue at least a portion of the target brake torque data to at least each one of the service brake and the auxiliary brake.

The second aspect of the disclosure may seek to solve the problem of obtaining an undesired vehicle dynamic response during braking. A technical benefit may include the possibility to brake a vehicle in an appropriate manner.

Optionally in some examples, including in at least one preferred example, the trained learning model has been trained by the computer system of the first aspect of the disclosure.

Optionally in some examples, including in at least one preferred example, the computer system further comprises a learning model and wherein the processing circuitry is also configured to train the learning model in accordance with the first aspect of the disclosure.

Of a third aspect of the disclosure, there is provided a vehicle comprising at least a service brake and an auxiliary brake, the vehicle also comprising the computer system of any of the first and second aspects of the disclosure. Purely by way of example, the service brake and an auxiliary brake, respectively may be in accordance with any one of the examples presented above, for instance with reference to [9] - [17] above.

Of a fourth aspect of the disclosure, there is provided a computer-implemented method for training a learning model for use in determination of target brake torque data, indicative of a target brake torque for at least each one of a service brake and an auxiliary brake of a vehicle, the method comprising:

- receiving, by processing circuitry of a computer system, braking condition information comprising the following for each braking condition of a plurality of different braking conditions of the vehicle:

  ∘ operating condition data indicative of a current or predicted operating condition of the vehicle during the braking condition;
  ∘ brake torque data, indicative of an applied brake torque for at least each one of the service brake and the auxiliary brake during the braking condition, and
  ∘ vehicle dynamic response data indicative of a vehicle dynamic response of the vehicle during the braking condition,

- for each braking condition of the plurality of different braking conditions of the vehicle, associating, by the processing circuitry, the braking condition with a penalty in response to determining that the vehicle dynamic response data is indicative of a vehicle dynamic response of the vehicle during the braking condition being outside an allowable vehicle dynamic response range,
- inputting, by the processing circuitry, training data to the learning model to train the learning model through machine learning,

wherein the training data comprises at least the operating condition data and the brake torque data for at least each braking condition of the plurality of different braking conditions not being associated with a penalty.

Optionally in some examples, including in at least one preferred example, the training data further comprises information whether or not each braking condition is associated with a penalty.

Optionally in some examples, including in at least one preferred example, the training data comprises at least the operating condition data and the brake torque data for only each braking condition of the plurality of different braking conditions not being associated with a penalty.

Optionally in some examples, including in at least one preferred example, the braking condition information further comprises brake request data indicative of a brake request for the vehicle for each braking condition of a plurality of different braking conditions of the vehicle, preferably the training data also comprises the brake request data for at least each braking condition of the plurality of different braking conditions not being associated with a penalty.

Optionally in some examples, including in at least one preferred example, the vehicle dynamic response data comprises oscillation data indicative of an oscillation in speed and/or acceleration of the vehicle during the braking condition.

Optionally in some examples, including in at least one preferred example, the method comprises determining, by the processing circuitry, whether or not the oscillation data falls outside an allowable oscillation data range.

Optionally in some examples, including in at least one preferred example, the method comprises assigning, by the processing circuitry, the braking condition with the penalty if the oscillation data falls outside the allowable oscillation data range.

Optionally in some examples, including in at least one preferred example, the vehicle dynamic response data comprises deceleration error data indicative of an error between a target deceleration, preferably determined using the brake request data, and an actual deceleration.

Optionally in some examples, including in at least one preferred example, the method comprises determining, by the processing circuitry, whether or not the deceleration error data falls outside an allowable deceleration error data range.

Optionally in some examples, including in at least one preferred example, the method comprises assigning, by the processing circuitry, the braking condition with the penalty if the deceleration error data falls outside an allowable deceleration error data range.

Optionally in some examples, including in at least one preferred example, the vehicle dynamic response data comprises integrated deceleration error data indicative of an integrated error between a target deceleration, preferably determined using the brake request data, and an actual deceleration during a predetermined time range.

Optionally in some examples, including in at least one preferred example, the method comprises determining, by the processing circuitry, whether or not the integrated deceleration error data falls outside an allowable integrated deceleration error data range.

Optionally in some examples, including in at least one preferred example, the method comprises assigning, by the processing circuitry, the braking condition with the penalty if the integrated deceleration error data falls outside the allowable integrated deceleration error data range.

Optionally in some examples, including in at least one preferred example, the target brake torque data is indicative of a distribution of brake request among at least each one of the service brake and the auxiliary brake of the vehicle.

Optionally in some examples, including in at least one preferred example, the method comprises receiving, by the processing circuitry, the braking condition information from the vehicle.

Optionally in some examples, including in at least one preferred example, the learning model is or comprises an artificial neural network.

Of a fifth aspect of the disclosure, there is provided a computer-implemented method for braking a vehicle, the vehicle comprising at least a service brake and an auxiliary brake, the method comprising:

- receiving, by processing circuitry of a computer system, brake request data indicative of a brake request for the vehicle;
- receiving, by the processing circuitry, operating condition data indicative of a current or predicted operating condition of the vehicle;
- inputting, by the processing circuitry, the brake request data and the operating condition data to a trained learning model and obtain target brake torque data, indicative of a target brake torque for at least each one of the service brake and the auxiliary brake, from the trained learning model, and
- issuing, by the processing circuitry, at least a portion of the target brake torque data to at least each one of the service brake and the auxiliary brake.

Optionally in some examples, including in at least one preferred example, the trained learning model has been trained by the computer system of the first aspect of the disclosure and/or in accordance with a method of the fourth aspect of the disclosure.

Optionally in some examples, including in at least one preferred example, the method further comprises training a learning model in accordance with of the fourth aspect of the disclosure.

Of a sixth aspect of the disclosure, there is provided a computer program product comprising program code for performing, when executed by the processing circuitry, the method of the fourth aspect of the disclosure or the fifth aspect of the disclosure.

Of a seventh aspect of the disclosure, there is provided a non-transitory computer-readable storage medium comprising instructions, which when executed by the processing circuitry, cause the processing circuitry to perform the method of the fourth aspect of the disclosure or the fifth aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

    **FIG. 1** is a side view of an example of a vehicle.
    **FIG. 2** is a schematic top view of an example of a vehicle.
    **FIG. 3** schematically illustrates a computer system.
    **FIG. 4** is a graph illustrating a dynamic behavior of a vehicle.
    **FIG. 5** is a graph illustrating a dynamic behavior of a vehicle.
    **FIG. 6** schematically illustrates a computer system.
    **FIG. 7** is a schematic diagram of an exemplary computer system for implementing examples disclosed herein, according to an example.

**DETAILED DESCRIPTION**

The detailed description set forth below provides information and examples of the disclosed technology with sufficient detail to enable those skilled in the art to practice the disclosure.

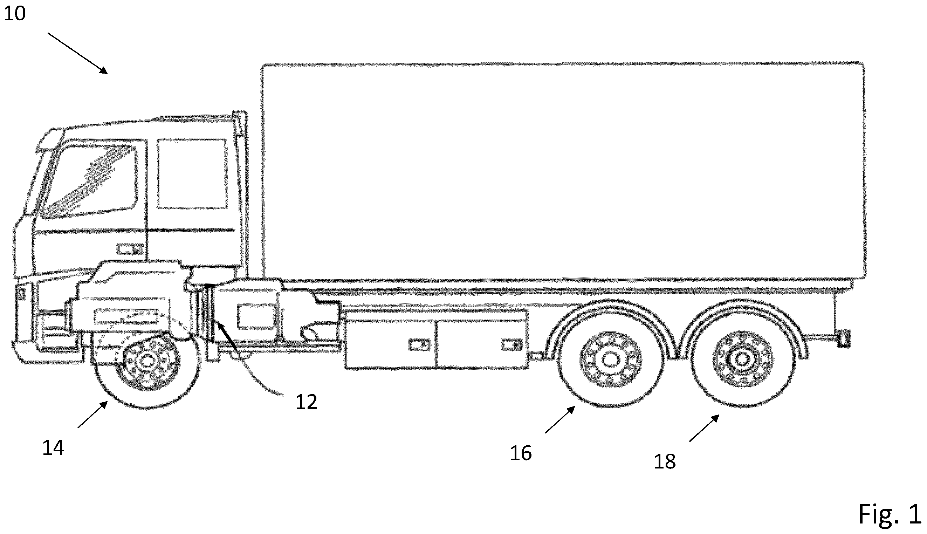

**FIG. 1** is an exemplary of a vehicle 10. The vehicle comprises a driveline 12 adapted to propel the vehicle 10. As may be gleaned from **FIG. 1,** the vehicle 10 comprises a set of wheels 14, 16, 18, three of which are visible in **FIG. 1.**

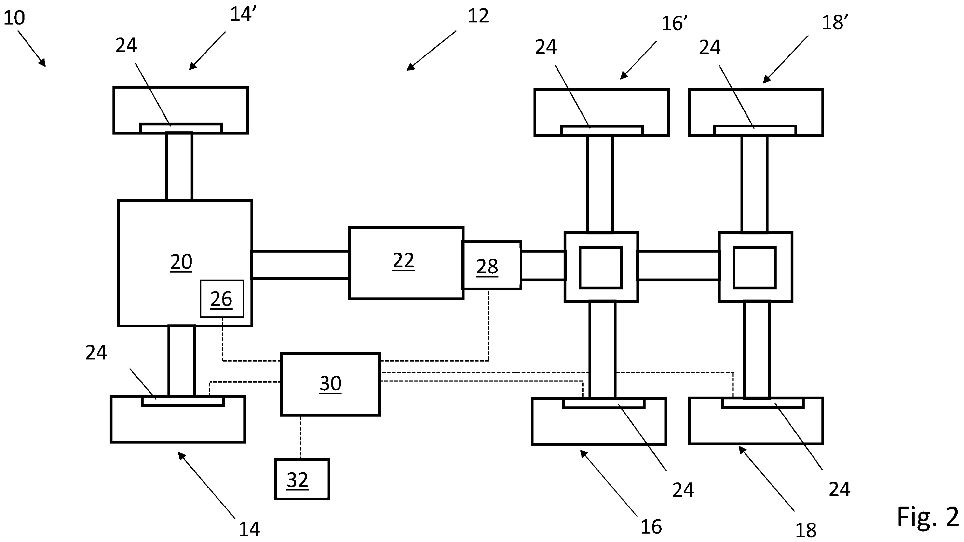

**FIG. 2** is a schematic top view of an implementation of a driveline 12 of a vehicle 10. The implementation of the driveline 12 illustrated in **FIG. 2** comprises a propulsion unit 20, a transmission assembly 22, and one or more wheels 14, 14',16, 16',18, 18'. Purely by way of example, the propulsion unit 20 may comprise, or be constituted by, an internal combustion engine. However, it is also envisaged that the propulsion unit may comprise, or be constituted by, an electric motor or a hybrid propulsion assembly that comprises an internal combustion engine and an electric motor. As a non-limiting example, the propulsion unit 20 may be connected to one or more wheels 16, 16',18, 18' via the transmission assembly 22. Purely by way of example, the transmission assembly 22 may comprise a gearbox (not shown) and/or one or more clutches (not shown). However, it is also envisaged that in other examples of the vehicle 10, the propulsion unit 20 may be connected to the one or more wheels 16, 16',18, 18' without an intermediate transmission assembly 22. For instance, in examples in which the propulsion unit 20 is an electric motor, the transmission assembly 22 may be omitted. By way of example only, examples of the vehicle 10 may comprise a plurality of electric motors (not shown) each one of which being adapted to propel a single wheel or a single wheel axle of the vehicle 10.

As may be gleaned from **FIG. 2,** the vehicle 10 comprises a service brake 24 and an auxiliary brake 26, 28. Moreover, the vehicle 10 also comprises a computer system 30 as will be elaborated on hereinbelow.

Purely by way of example, the service brake 24 may comprise one or more disk brakes, e.g. pneumatically or hydraulically controlled disk brakes, and/or one or more drum brakes, e.g. pneumatically or hydraulically controlled drum brakes. In the example identified in **FIG. 2,** the service brake 24 comprises a set of disk brakes, one for each wheel 14, 14',16, 16',18, 18' of the vehicle 10. However, it is also envisaged that in other examples of the vehicle 10, the service brake 24 may not contain disk or drum brakes for every wheel 14, 14',16, 16',18, 18' of the vehicle 10.

As has been intimated in [9] - [17] above, the term "auxiliary brake" may encompass either one or both of a primary and a secondary auxiliary brakes of a vehicle 10. In the example illustrated in **FIG. 2,** the auxiliary brake 26, 28 is implemented as a combination of a primary auxiliary brake 26 and a secondary auxiliary brake 28. By way of example only, the primary auxiliary brake 26 may be implemented as compression brake, i.e. an engine brake, and the secondary auxiliary brake 28 may be implemented as a retarder, for instance a compact retarder. However, in other examples of the vehicle 10, the auxiliary brake 26, 28 may comprise a single auxiliary brake, such as the compression brake 26 only or the retarder 28 only.

As may be realized from the above, the auxiliary brake may be implemented in a plurality of different ways. However, as a general, though non-limiting, example, the auxiliary brake may apply a brake torque on one or more driven wheels 16, 16',18, 18' of a vehicle 10.

Moreover, as indicated by way of example only in **FIG. 2,** the computer system 30 may be adapted to issue data to service brake 24 and the auxiliary brake 26, 28. Moreover, again by way of example only, the computer system 30 may be adapted to receive information from a sensor assembly 32. Purely by way of example, the sensor assembly 32 may be adapted to receive data associated with the operation of the vehicle 10 as will be elaborated on further hereinbelow. As another non-limiting example, the sensor assembly 32 may be adapted to receive data associated with a brake request for the vehicle 10 as will be elaborated on further hereinbelow.

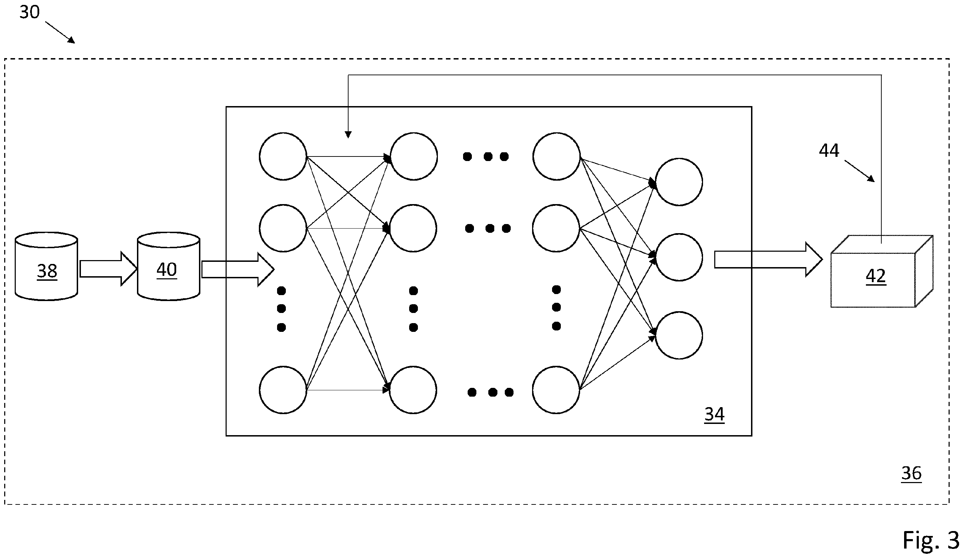

**FIG. 3** schematically illustrates an example of a computer system 30 of a first aspect of the disclosure. As may be gleaned from **FIG. 3** the computer system 30 comprises a learning model 34 and processing circuitry 36 configured to train the learning model 34 for use in determination of target brake torque data, indicative of a target brake torque for at least each one of a service brake 24 and an auxiliary brake 26, 28 of a vehicle 10, reference being made to e.g. **FIG. 2.** In the **FIG. 3** example, the learning model 34 is exemplified as an artificial neural network. However, it is envisaged that other types of learning models may also be used.

Irrespective of the implementation of the learning model 34, the processing circuitry 36 is configured to receive braking condition information 38 comprising the following for each braking condition of a plurality of different braking conditions of the vehicle 10:

  ○ operating condition data indicative of a current or predicted operating condition of the vehicle 10 during the braking condition;
  ○ brake torque data, indicative of an applied brake torque for at least each one of the service brake 24 and the auxiliary brake 26, 28 during the braking condition, and
  ○ vehicle dynamic response data indicative of a vehicle dynamic response of the vehicle 10 during the braking condition.

Purely by way of example, the computer system 30 may be located on or at least be in communication with a vehicle 10, see e.g. the **FIG. 2** example. As such, the computer system 30 may be adapted to receive the braking condition information 38 via the sensor assembly 32 as presented above in relation to **FIG. 2.** However, it is also envisaged that in other examples of the computer system 30, the computer system 30 may receive the braking condition information 38 via an intermediate storage service (not shown) and/or via communication means (not shown) such as via the internet or via wireless communication.

Moreover, the processing circuitry 36 is configured to, for each braking condition of the plurality of different braking conditions of the vehicle 10, associate the braking condition with a penalty in response to determining that the vehicle dynamic response data is indicative of a vehicle dynamic response of the vehicle during the braking condition being outside an allowable vehicle dynamic response range.

Purely by way of example, the term "penalty" may relate to any type of marking indicating that the vehicle dynamic response data is indicative of a vehicle dynamic response of the vehicle during the braking condition being outside an allowable vehicle dynamic response range. Purely by way of example, a "penalty" may be a flag (e.g. "penalty", "yes" or the like) or a boolean value (e.g. 1) which is associated with a braking condition having a vehicle dynamic response being outside an allowable vehicle dynamic response range. It is also envisaged that a "penalty" may be a numerical value, such as an integer, a real number or the like. Purely by way of example, when the "penalty" is a numerical value, the numerical value may be used for indicating how far from the allowable vehicle dynamic response range the vehicle dynamic response of the braking condition is.

Moreover, though purely by way of example, when the vehicle dynamic response data is indicative of a vehicle dynamic response of the vehicle during a braking condition being within an allowable vehicle dynamic response range, the braking condition may be associated with a reward. In a similar vein as for the "penalty", a "reward" may be a flag (e.g. "reward", "no" or the like) or a boolean value (e.g. 0) which is associated with a braking condition having a vehicle dynamic response being within the allowable vehicle dynamic response range. It is also envisaged a "reward" may be a numerical value, such as an integer, a real number or the like.

Moreover, the processing circuitry 36 is configured to input training data 40 to the learning model 34 to train the learning model 34 through machine learning. The training data 40 comprises at least the operating condition data and the brake torque data for at least each braking condition of the plurality of different braking conditions not being associated with a penalty. By way of example only, and as indicated in **FIG. 3,** the learning model 34 may produce results 42 which may be used in training method 44 which is exemplified as a feedback loop in **FIG. 3.**

By way of example only, the training data 40 may further comprise information whether or not each braking condition is associated with a penalty. As such, though purely by way of example, the training method 44 may use the information relating to a penalty, for instance for each braking condition, when training the learning model 34. As another non-limiting example, the training data 40 may comprise at least the operating condition data and the brake torque data for each braking condition of the plurality of different braking conditions not being associated with a penalty only. Thus, by way of example only, the processing circuitry 36 may be adapted to filter out each braking condition associated with a penalty before or when inputting training data 40 to the learning model 34.

Purely by way of example, the training data 40 may further comprise information whether or not each braking condition is associated with a reward as has been discussed hereinabove.

By way of example only, the braking condition information further comprises brake request data indicative of a brake request for the vehicle for each braking condition of a plurality of different braking conditions of the vehicle, preferably the training data also comprises the brake request data for at least each braking condition of the plurality of different braking conditions not being associated with a penalty.

The vehicle dynamic response data may be assessed in a plurality of different ways for assessing whether or not the vehicle dynamic response data is indicative of a vehicle dynamic response of the vehicle during the braking condition being outside an allowable vehicle dynamic response range.

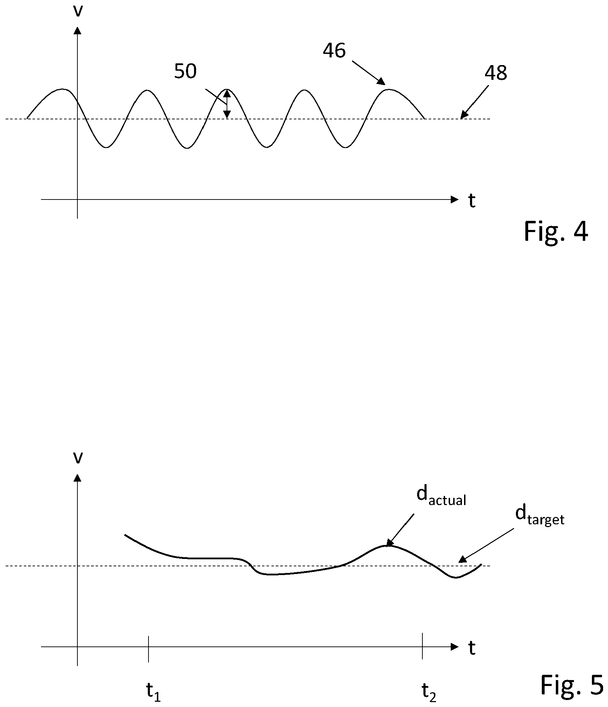

To this end reference is made to **FIG. 4,** illustrating a non-limiting example in which the vehicle dynamic response data comprises oscillation data indicative of an oscillation in speed and/or acceleration of the vehicle 10 (see e.g. **FIG. 2**) during the braking condition. The **FIG. 4** example illustrates a curve 46 representing the speed of a vehicle 10 during a braking condition. The x-axis of **FIG. 4** represents time and the y-axis represents the speed. As may be realized from **FIG. 4,** the speed oscillates, for instance around an average speed 48 as exemplified in **FIG. 4.** In other examples, a curve 46 may instead represent an acceleration a vehicle 10 during a braking condition.

By way of example only, the processing circuitry 36 (see e.g. **FIG. 3**) may be configured to determine whether or not the oscillation data falls outside an allowable oscillation data range. As a non-limiting example, the above feature of determining whether or not the oscillation data falls outside an allowable oscillation data range may comprise determining a maximum amplitude 50, viz the maximum distance from the average speed 48 to the curve 46 representing the speed, during the braking condition. The allowable oscillation data range may in such an example be associated with a maximum allowable amplitude such that the allowable oscillation data range extends from zero to the maximum allowable amplitude.

As another non-limiting example, the above feature of determining whether or not the oscillation data falls outside an allowable oscillation data range may comprise determining a statistical measure indicative of the variation of the speed and/or acceleration during the braking condition. By way of example only, such a statistical measure may be implemented as a variance or a standard deviation of the speed or acceleration during the braking condition. The allowable oscillation data range may in such examples relate to a range extending from zero to a maximum allowable variance or the standard deviation.

By way of example only, the processing circuitry 36 (see e.g. **FIG. 3)** may be configured to assign the braking condition with the penalty if the oscillation data falls outside the allowable oscillation data range.

Instead of, or in addition to, the above, the vehicle dynamic response data may comprise deceleration error data indicative of an error between a target deceleration $d_{target}$, preferably determined using the brake request data, and an actual deceleration $d_{actual}$. Purely by way of example, the error e may be determined in accordance with any one of the following: $e = d_{target} - d_{actual}$, alternatively $e = |d_{target} - d_{actual}|$.

As a non-limiting example, the circuitry 36 (see e.g. **FIG. 3)** may be configured to determine whether or not the deceleration error data falls outside an allowable deceleration error data range. Moreover, though purely by way of example, the processing circuitry 36 may be configured to assign the braking condition with the penalty if the deceleration error data falls outside an allowable deceleration error data range.

Purely by way of example, the above-mentioned deceleration error data may be indicative of the error between the target deceleration $d_{target}$ and the actual deceleration $d_{actual}$ at the end of the braking condition.

However, instead of, or in addition to the above, the vehicle dynamic response data may comprise an integrated deceleration error data indicative of an integrated error between a target deceleration, preferably determined using the brake request data, and an actual deceleration during a predetermined time range. To this end, reference is made to **FIG. 5** illustrating the target deceleration $d_{target}$ and the actual deceleration $d_{actual}$ as a function of time during a predetermined time range starting at $t_1$ and ending at $t_2$. For each time instant between $t_1$ and $t_2$, the error $e(t)$ may for instance be determined in accordance with any one of the following examples: $e(t) = d_{target}(t) - d_{actual}(t)$ or $e(t) = |d_{target}(t) - d_{actual}(t)|$. Irrespective of how the error $e(t)$ is determined, the integrated error EI may be determined in accordance with the following:

$$EI = \int_{t_1}^{t_2} e(t)\, dt$$

.

Purely by way of example, the processing circuitry 36 may be configured to determine whether or not the integrated deceleration error data falls outside an allowable integrated deceleration error data range. By way of example only, the processing circuitry 36 may be configured to assign the braking condition with the penalty if the integrated deceleration error data falls outside the allowable integrated deceleration error data range.

By way of example only, the target brake torque data may be indicative of a distribution of brake request among at least each one of the service brake and the auxiliary brake of the vehicle. As such, as a non-limiting example, the target brake torque data may be indicative of a service brake percentage of a total brake torque or a brake effect that should be provided by the service brake and an auxiliary brake percentage of a total brake torque or a brake effect that should be provided by the auxiliary brake of the vehicle.

Moreover, the processing circuitry 36 may be configured to receive the braking condition information from the vehicle.

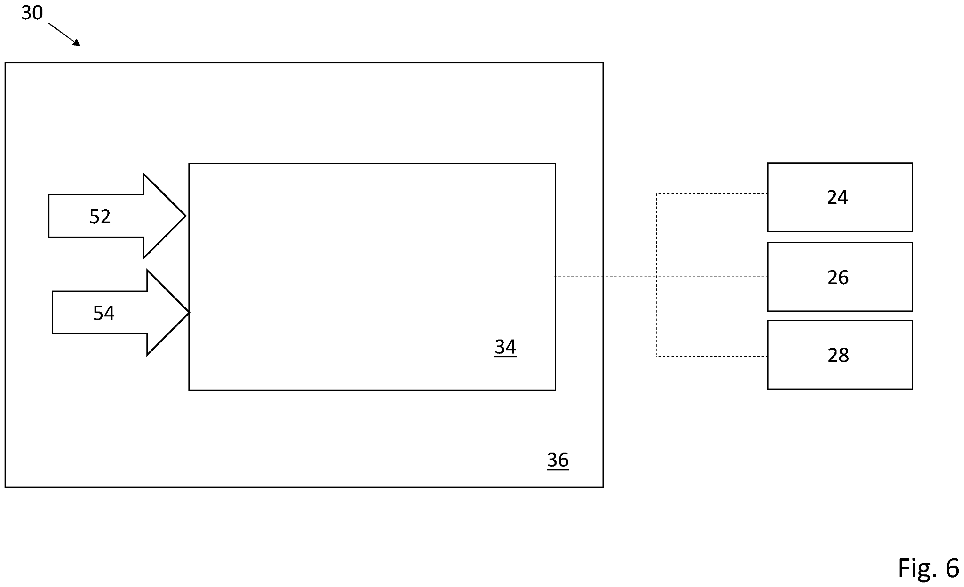

**FIG. 6** illustrates an example of a second aspect of the disclosure. As may be gleaned from **FIG. 6** the second aspect of the disclosure relates to computer system 30, comprising processing circuitry 36, for a vehicle 10 (see e.g. **FIG. 2)**. The vehicle comprises at least a service brake 24 and an auxiliary brake 26, 28.

The processing circuitry 36 is configured to:

- Receive brake request data 52 indicative of a brake request for the vehicle 10. Purely by way of example, the processing circuitry 36 may be adapted to receive brake request data 52 from the sensor assembly 32 which assembly for instance may comprise a sensor detecting a position of a brake pedal (not shown). Alternatively, the receive brake request data 52 may be received from a system controlling autonomous driving of the vehicle 10.

- Receive operating condition data 54 indicative of a current or predicted operating condition of the vehicle. Again, the processing circuitry 36 may be adapted to receive operating condition data 54 from the sensor assembly 32.

- Input the brake request data 52 and the operating condition data 54 to a trained learning model 34 and obtain target brake torque data, indicative of a target brake torque for at least each one of the service brake 24 and the auxiliary brake 26, 28, from the trained learning model 34, and

- Issue at least a portion of the target brake torque data to at least each one, preferably to each one, of the service brake 24 and the auxiliary brake 26, 28, as indicated by the dashed lines in **FIG. 6.**

Purely by way of example, the trained learning model 34 has been trained by the computer system of the first aspect of the disclosure, for instance as exemplified above with reference to **FIG. 3.**

Furthermore, it is also envisaged that the computer system according to the second aspect of the disclosure further comprises a learning model 34 and wherein the processing circuitry is also configured to train the learning model 34 in accordance with the first aspect of the disclosure, for instance as presented above with reference to **FIG. 3**.

Although the disclosure has been presented above with reference to computer systems, it should be noted that the above presentation is equally applicable to the fourth and fifth aspects of the disclosure relating to methods.

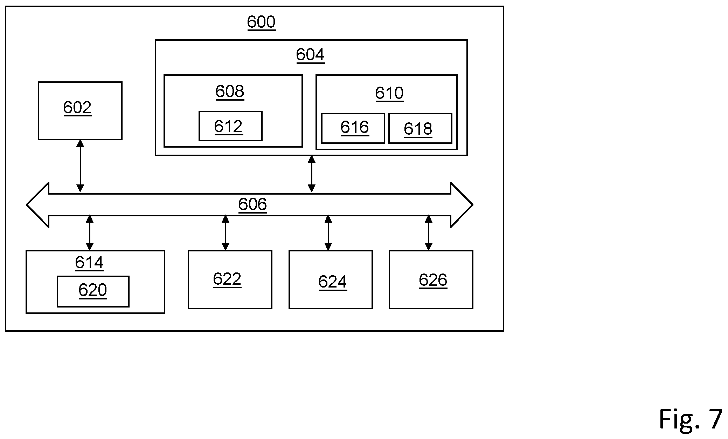

**FIG. 7** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606**. The computer system **600** may include at least one computing device having the processing circuitry **602**. The system bus **606** provides an interface for system components including, but not limited to, the memory **604** and the processing circuitry **602**. The processing circuitry **602** may include any number of hardware components for conducting data or signal processing or for executing computer code stored in memory **604**. The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602**. A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device

interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

Examples of the disclosure are presented hereinbelow.

Example 1. A computer system (30) comprising a learning model (34) and processing circuitry (36) configured to train said learning model (34) for use in determination of target brake torque data, indicative of a target brake torque for at least each one of a service brake (24) and an auxiliary brake (26; 28) of a vehicle (10), said processing circuitry (36) being configured to:

- receive braking condition information (38) comprising the following for each braking condition of a plurality of different braking conditions of said vehicle (10):

    ○ operating condition data indicative of a current or predicted operating condition of said vehicle (10) during said braking condition;
    ○ brake torque data, indicative of an applied brake torque for at least each one of said service brake (24) and said auxiliary brake (26; 28) during said braking condition, and
    ○ vehicle dynamic response data indicative of a vehicle dynamic response of said vehicle (10) during said braking condition,

- for each braking condition of said plurality of different braking conditions of the vehicle (10), associate said braking condition with a penalty in response to determining that said vehicle dynamic response data is indicative of a vehicle dynamic response of said vehicle (10) during said braking condition being outside an allowable vehicle dynamic response range,
- input training data (40) to the learning model (34) to train the learning model (34) through machine learning,

wherein the training data (40) comprises at least said operating condition data and said brake torque data for at least each braking condition of said plurality of different braking conditions not being associated with a penalty.

Example 2. The computer system (30) of Example 1, wherein said training data (40) further comprises information whether or not each braking condition is associated with a penalty.

Example 3. The computer system (30) of Example 1 or Example 2, wherein said braking condition information (38) further comprises brake request data indicative of a brake request for the vehicle (10) for each braking condition of a plurality of different braking conditions of said vehicle (10), preferably said training data (40) also comprises said brake request data for at least each braking condition of said plurality of different braking conditions not being associated with a penalty.

Example 4. The computer system (30) of any one of the preceding Examples, wherein said vehicle dynamic response data comprises oscillation data indicative of an oscillation in speed and/or acceleration of said vehicle (10) during said braking condition.

Example 5. The computer system (30) of Example 4, wherein said processing circuitry (36) is configured to determine whether or not said oscillation data falls outside an allowable oscillation data range.

Example 6. The computer system (30) of Example 5, wherein said processing circuitry (36) is configured to assign the braking condition with said penalty if said oscillation data falls outside said allowable oscillation data range.

Example 7. The computer system (30) of any one of the preceding Examples, wherein said vehicle dynamic response data comprises deceleration error data indicative of an error (e) between a target deceleration ($d_{target}$), preferably determined using said brake request data, and an actual deceleration ($d_{actual}$).

Example 8. The computer system (30) of Example 7, wherein said processing circuitry (36) is configured to determine whether or not said deceleration error data falls outside an allowable deceleration error data range.

Example 9. The computer system (30) of Example 8, wherein said processing circuitry (36) is configured to assign the braking condition with said penalty if said deceleration error data falls outside an allowable deceleration error data range.

Example 10. The computer system (30) of any one of the preceding Examples, wherein said vehicle dynamic response data comprises integrated deceleration error data indicative of an integrated error (EI) between a target deceleration ($d_{target}$), preferably determined using said brake request data, and an actual deceleration ($d_{actual}$) during a predetermined time range ($t_1 - t_2$).

Example 11. The computer system (30) of Example 10, wherein said processing circuitry (36) is configured to determine whether or not said integrated deceleration error data falls outside an allowable integrated deceleration error data range.

Example 12. The computer system (30) of Example 11, wherein said processing circuitry (36) is configured to assign the braking condition with said penalty if said integrated deceleration error data falls outside said allowable integrated deceleration error data range.

Example 13. The computer system (30) of any one of the preceding Examples, wherein said target brake torque data is indicative of a distribution of brake request among at least each one of said service brake (24) and said auxiliary brake (26; 28) of said vehicle (10).

Example 14. The computer system (30) of any one of the preceding Examples, wherein said processing circuitry (36) is configured to receive said braking condition information (38) from said vehicle (10).

Example 15. The computer system (30) of any one of the preceding Examples, wherein said learning model (34) is or comprises an artificial neural network.

Example 16. A computer system (30), comprising processing circuitry (36), for a vehicle (10), said vehicle (10) comprising at least a service brake (24) and an auxiliary brake (26; 28), said processing circuitry (36) being configured to:

- receive brake request data indicative of a brake request for the vehicle (10);
- receive operating condition data indicative of a current or predicted operating condition of said vehicle (10);
- input said brake request data and said operating condition data to a trained learning model (34) and obtain target brake torque data, indicative of a target brake torque for at least each one of said service brake (24) and said auxiliary brake (26; 28), from said trained learning model (34), and
- issue at least a portion of said target brake torque data to at least each one of said service brake (24) and said auxiliary brake (26; 28).

Example 17. The computer system (30) of Example 16, wherein said trained learning model (34) has been trained by said computer system (30) of any one of Examples 1 - 15.

Example 18. The computer system (30) of Example 16 or Example 17, wherein computer system (30) further comprises a learning model (34) and wherein said processing circuitry (36) is also configured to train said learning model (34) in accordance with any one of Examples 1 - 15.

Example 19. A vehicle (10) comprising at least a service brake (24) and an auxiliary brake (26; 28), said vehicle (10) also comprising the computer system (30) of any of Examples 1 - 18.

Example 20. A computer-implemented method for training a learning model (34) for use in determination of target brake torque data, indicative of a target brake torque for at least each one of a service brake (24) and an auxiliary brake (26; 28) of a vehicle (10), said method comprising:

- receiving, by processing circuitry (36) of a computer system (30), braking condition information (38) comprising the following for each braking condition of a plurality of different braking conditions of said vehicle (10):

  ○ operating condition data indicative of a current or predicted operating condition of said vehicle (10) during said braking condition;
  ○ brake torque data, indicative of an applied brake torque for at least each one of said service brake (24) and said auxiliary brake (26; 28) during said braking condition, and
  ○ vehicle dynamic response data indicative of a vehicle dynamic response of said vehicle (10) during said braking condition,

- for each braking condition of said plurality of different braking conditions of the vehicle (10), associating, by the processing circuitry (36), said braking condition with a penalty in response to determining that said vehicle dynamic response data is indicative of a vehicle dynamic response of said vehicle (10) during said braking condition being outside an allowable vehicle dynamic response range,
- inputting, by the processing circuitry (36), training data (40) to the learning model (34) to train the learning model (34) through machine learning,

wherein the training data (40) comprises at least said operating condition data and said brake torque data for at least each braking condition of said plurality of different braking conditions not being associated with a penalty.

Example 21. The method of Example 20, wherein said training data (40) further comprises information whether or not each braking condition is associated with a penalty.

Example 22. The method of Example 20 or Example 21, wherein said braking condition information (38) further comprises brake request data indicative of a brake request for the vehicle (10) for each braking condition of a plurality of different braking conditions of said vehicle (10), preferably said training data (40) also comprises said brake request data for at least each braking condition of said plurality of different braking conditions not being associated with a penalty.

Example 23. The method of any one of Examples 20 - 22, wherein said vehicle dynamic response data comprises oscillation data indicative of an oscillation in speed and/or acceleration of said vehicle (10) during said braking condition.

Example 24. The method of Example 23, wherein said method comprises determining, by the processing circuitry (36), whether or not said oscillation data falls outside an allowable oscillation data range.

Example 25. The method of Example 24, wherein said method comprises assigning, by the processing circuitry (36), the braking condition with said penalty if said oscillation data falls outside said allowable oscillation data range.

Example 26. The method of any one of Examples 20 - 25, wherein said vehicle dynamic response data comprises deceleration error data indicative of an error (e) between a target deceleration ($d_{target}$), preferably determined using said brake request data, and an actual deceleration ($d_{actual}$).

Example 27. The method of Example 26, wherein said method comprises determining, by the processing circuitry (36), whether or not said deceleration error data falls outside an allowable deceleration error data range.

Example 28. The method of Example 27, wherein said method comprises assigning, by the processing circuitry (36), the braking condition with the penalty if said deceleration error data falls outside an allowable deceleration error data range.

Example 29. The method of any one of Examples 20 - 28, wherein said vehicle dynamic response data comprises integrated deceleration error data indicative of an integrated error (EI) between a target deceleration ($d_{target}$), preferably determined using said brake request data, and an actual deceleration ($d_{actual}$) during a predetermined time range ($t_1$ - $t_2$).

Example 30. The method of Example 29, wherein said method comprises determining, by the processing circuitry (36), whether or not said integrated deceleration error data falls outside an allowable integrated deceleration error data range.

Example 31. The method of Example 30, wherein said method comprises assigning, by the processing circuitry (36), the braking condition with the penalty if said integrated deceleration error data falls outside said allowable integrated deceleration error data range.

Example 32. The method of any one of Examples 20 - 31, wherein said target brake torque data is indicative of a distribution of brake request among at least each one of said service brake (24) and said auxiliary brake (26; 28) of said vehicle (10).

Example 33. The method of any one of Examples 20 - 32, wherein said method comprises receiving, by the processing circuitry (36), said braking condition information (38) from said vehicle (10).

Example 34. The method of any one of Examples 20 - 33, wherein said learning model (34) is or comprises an artificial neural network.

Example 35. A computer-implemented method for braking a vehicle (10), said vehicle (10) comprising at least a service brake (24) and an auxiliary brake (26; 28), said method comprising:

- receiving, by processing circuitry (36) of a computer system (30), brake request data indicative of a brake request for the vehicle (10);
- receiving, by the processing circuitry (36), operating condition data indicative of a current or predicted operating condition of said vehicle (10);
- inputting, by the processing circuitry (36), said brake request data and said operating condition data to a trained learning model (34) and obtain target brake torque data, indicative of a target brake torque for at least each one of said service brake (24) and said auxiliary brake (26; 28), from said trained learning model (34), and
- issuing, by the processing circuitry (36), at least a portion of said target brake torque data to at least each one of said service brake (24) and said auxiliary brake (26; 28).

Example 36. The method of Example 35, wherein said trained learning model (34) has been trained by said computer system (30) of any one of Examples 1 - 15 and/or in accordance with a method of any one of Examples 20 - 34.

Example 37. The method of Example 35 or 36, further comprising training a learning model (34) in accordance with any one of Examples 20 - 34.

Example 38. A computer program product comprising program code for performing, when executed by the processing circuitry (36), the method of any of Examples 20-37.

Example 39. A non-transitory computer-readable storage medium comprising instructions, which when executed by the processing circuitry (36), cause the processing circuitry (36) to perform the method of any of Examples 20 - 37.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (30) comprising a learning model (34) and processing circuitry (36) configured to train said learning model (34) for use in determination of target brake torque data, indicative of a target brake torque for at least each one of a service brake (24) and an auxiliary brake (26; 28) of a vehicle (10), said processing circuitry (36) being configured to:

   - receive braking condition information (38) comprising the following for each braking condition of a plurality of different braking conditions of said vehicle (10):

     ∘ operating condition data indicative of a current or predicted operating condition of said vehicle (10) during said braking condition;
     ∘ brake torque data, indicative of an applied brake torque for at least each one of said service brake (24) and said auxiliary brake (26; 28) during said braking condition, and
     ∘ vehicle dynamic response data indicative of a vehicle dynamic response of said vehicle (10) during said braking condition,

   - for each braking condition of said plurality of different braking conditions of the vehicle (10), associate said braking condition with a penalty in response to determining that said vehicle dynamic response data is indicative of a vehicle dynamic response of said vehicle (10) during said braking condition being outside an allowable vehicle dynamic response range,
   - input training data (40) to the learning model (34) to train the learning model (34) through machine learning,

   wherein the training data (40) comprises at least said operating condition data and said brake torque data for at least each braking condition of said plurality of different braking conditions not being associated with a penalty.

2. The computer system (30) of claim 1, wherein said training data (40) further comprises information whether or not each braking condition is associated with a penalty.

3. The computer system (30) of claim 1 or claim 2, wherein said braking condition information (38) further comprises brake request data indicative of a brake request for the vehicle (10) for each braking condition of a plurality of different braking conditions of said vehicle (10), preferably said training data (40) also comprises said brake request data for at least each braking condition of said plurality of different braking conditions not being associated with a penalty.

4. The computer system (30) of any one of the preceding claims, wherein said vehicle dynamic response data comprises oscillation data indicative of an oscillation in speed and/or acceleration of said vehicle (10) during said braking condition, optionally said processing circuitry (36) is configured to determine whether or not said oscillation data falls outside an allowable oscillation data range, optionally said processing circuitry (36) is configured to assign the braking condition with said penalty if said oscillation data falls outside said allowable oscillation data range.

5. The computer system (30) of any one of the preceding claims, wherein said vehicle dynamic response data comprises deceleration error data indicative of an error (e) between a target deceleration ($d_{target}$), preferably determined using said brake request data, and an actual deceleration ($d_{actual}$), optionally said processing circuitry (36) is configured to determine whether or not said deceleration error data falls outside an allowable deceleration error data range, optionally said processing circuitry (36) is configured to assign the braking condition with said penalty if said deceleration error data falls outside an allowable deceleration error data range.

6. The computer system (30) of any one of the preceding claims, wherein said vehicle dynamic response data comprises integrated deceleration error data indicative of an integrated error (EI) between a target deceleration ($d_{target}$), preferably determined using said brake request data, and an actual deceleration ($d_{actual}$) during a predetermined time range ($t_1$ - $t_2$), optionally said processing circuitry (36) is configured to determine whether or not said integrated deceleration error data falls outside an allowable integrated deceleration error data range, optionally said processing circuitry (36) is configured to assign the braking condition with said penalty if said integrated deceleration error data falls outside said allowable integrated deceleration error data range.

7. The computer system (30) of any one of the preceding claims, wherein said target brake torque data is indicative of a distribution of brake request among at least each one of said service brake (24) and said auxiliary brake (26; 28) of said vehicle (10).

8. A computer system (30), comprising processing circuitry (36), for a vehicle (10), said vehicle (10) comprising at least a service brake (24) and an auxiliary brake (26; 28), said processing circuitry (36) being configured to:

- receive brake request data indicative of a brake request for the vehicle (10);
- receive operating condition data indicative of a current or predicted operating condition of said vehicle (10);
- input said brake request data and said operating condition data to a trained learning model (34) and obtain target brake torque data, indicative of a target brake torque for at least each one of said service brake (24) and said auxiliary brake (26; 28), from said trained learning model (34), and
- issue at least a portion of said target brake torque data to at least each one of said service brake (24) and said auxiliary brake (26; 28).

9. The computer system (30) of claim 8, wherein said trained learning model (34) has been trained by said computer system (30) of any one of claims 1-7.

10. The computer system (30) of claim 8 or claim 9, wherein computer system (30) further comprises a learning model (34) and wherein said processing circuitry (36) is also configured to train said learning model (34) in accordance with any one of claims 1-7.

11. A vehicle (10) comprising at least a service brake (24) and an auxiliary brake (26; 28), said vehicle (10) also comprising the computer system (30) of any of claims 1 - 10.

12. A computer-implemented method for training a learning model (34) for use in determination of target brake torque data, indicative of a target brake torque for at least each one of a service brake (24) and an auxiliary brake (26; 28) of a vehicle (10), said method comprising:

- receiving, by processing circuitry (36) of a computer system (30), braking condition information (38) comprising the following for each braking condition of a plurality of different braking conditions of said vehicle (10):

○ operating condition data indicative of a current or predicted operating condition of said vehicle (10) during said braking condition;
○ brake torque data, indicative of an applied brake torque for at least each one of said service brake (24) and said auxiliary brake (26; 28) during said braking condition, and
○ vehicle dynamic response data indicative of a vehicle dynamic response of said vehicle (10) during said braking condition,

- for each braking condition of said plurality of different braking conditions of the vehicle (10), associating, by the processing circuitry (36), said braking condition with a penalty in response to determining that said vehicle dynamic response data is indicative of a vehicle dynamic response of said vehicle (10) during said braking condition being outside an allowable vehicle dynamic response range,
- inputting, by the processing circuitry (36), training data (40) to the learning model (34) to train the learning model (34) through machine learning,

wherein the training data (40) comprises at least said operating condition data and said brake torque data for at least each braking condition of said plurality of different braking conditions not being associated with a penalty.

13. A computer-implemented method for braking a vehicle (10), said vehicle (10) comprising at least a service brake (24) and an auxiliary brake (26; 28), said method comprising:

> - receiving, by processing circuitry (36) of a computer system (30), brake request data indicative of a brake request for the vehicle (10);
> - receiving, by the processing circuitry (36), operating condition data indicative of a current or predicted operating condition of said vehicle (10);
> - inputting, by the processing circuitry (36), said brake request data and said operating condition data to a trained learning model (34) and obtain target brake torque data, indicative of a target brake torque for at least each one of said service brake (24) and said auxiliary brake (26; 28), from said trained learning model (34), and
> - issuing, by the processing circuitry (36), at least a portion of said target brake torque data to at least each one of said service brake (24) and said auxiliary brake (26; 28).

14. The method of claim 13, wherein said trained learning model (34) has been trained by said computer system (30) of any one of claims 1-7 and/or in accordance with a method of claim 12.

15. The method of claim 13 or 14, further comprising training a learning model (34) in accordance with claim 12.

Fig. 1

Fig. 2

EP 4 660 026 A1

Fig. 3

V

50    46    48

t

Fig. 4

V

$d_{actual}$    $d_{target}$

t₁    t₂    t

Fig. 5

Fig. 6

Fig. 7

Europäisches
Patentamt

European
Patent Office

Office européen
des brevets

# EUROPEAN SEARCH REPORT

**Application Number**

EP 24 18 0853

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 344 970 A1 (SIEMENS MOBILITY GMBH [DE]) 3 April 2024 (2024-04-03) | 1-3,7-15 | INV. B60T8/172 |
| Y | * paragraphs [0002] - [0004], [0007], [0011], [0014] - [0022], [0033] - [0038], [0058] * <br> * figures 1-3 * <br> * claims 1-15 * <br> ----- | 4-6 | B60T8/174 B60T13/66 B60T17/22 |
| Y | US 2014/343767 A1 (OSWALD JAMES A [US] ET AL) 20 November 2014 (2014-11-20) <br> * paragraph [0037] - paragraph [0042] * <br> ----- | 4-6 | |
| A | CN 116 160 864 A (UNIV HUAQIAO) 26 May 2023 (2023-05-26) <br> * claims 1-9 * <br> ----- | 1-15 | |

**TECHNICAL FIELDS SEARCHED (IPC)**

B60T

The present search report has been drawn up for all claims

| Place of search | Date of completion of the search | Examiner |
|---|---|---|
| Munich | 24 October 2024 | Colonna, Massimo |

## ANNEX TO THE EUROPEAN SEARCH REPORT
## ON EUROPEAN PATENT APPLICATION NO.

EP 24 18 0853

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2024

| Patent document cited in search report | | Publication date | Patent family member(s) | | Publication date |
|---|---|---|---|---|---|
| EP 4344970 | A1 | 03-04-2024 | DE | 102022210317 A1 | 04-04-2024 |
| | | | EP | 4344970 A1 | 03-04-2024 |
| US 2014343767 | A1 | 20-11-2014 | AU | 2014200345 A1 | 04-12-2014 |
| | | | AU | 2019226238 A1 | 26-09-2019 |
| | | | CA | 2840628 A1 | 17-11-2014 |
| | | | MX | 359353 B | 26-09-2018 |
| | | | US | 2014343767 A1 | 20-11-2014 |
| | | | US | 2016159329 A1 | 09-06-2016 |
| CN 116160864 | A | 26-05-2023 | NONE | | |

EPO FORM P0459

For more details about this annex : see Official Journal of the European Patent Office, No. 12/82